# EUROPEAN PATENT APPLICATION

(11) **EP 3 989 140 A1**
(43) Date of publication of application: **27.04.2022**
(21) Application number: 21199006.4
(22) Date of filing: 24.09.2021
(51) Int. Cl.: G06Q 10/06, G06Q 10/08, G06Q 20/22, G06Q 50/04, B29C 64/386

(54) **DISTRIBUTED QUALITY MANAGEMENT AND CONTROL SYSTEMS AND METHODS FOR DECENTRALIZED MANUFACTURING USING CONNECTED SENSOR DEVICES**

(30) Priority: 21.10.2020 IN 202011045860; 14.12.2020 US 202017121088
(71) Applicant: Honeywell International Inc., Charlotte, NC 28202 (US)
(72) Inventor: RAO, Sujaya, Charlotte, 28202 (US); GODFREY, Donald, Charlotte, 28202 (US); MUNIRAJU, Raghavendra, Charlotte, 28202 (US); KAR, Satyanarayan, Charlotte, 28202 (US); HOTA, Rakesh, Charlotte, 28202 (US); JAYARAJAN, Keerthi, Charlotte, 28202 (US); KASIMSETTY, Vinayakumar, Charlotte, 28202 (US)
(74) Representative: LKGlobal UK Ltd.

(57) **Abstract**

A method for additive manufacturing process parameter monitoring of additively manufactured articles and associated raw materials, comprising the steps of: at an additive manufacturing raw material supplier , packaging a raw additive manufacturing material, which may be a metal powder, and placing a sensor device inside the packaging, wherein the sensor device monitors one or more material parameters, as the packaging moves through a supply chain, and wherein sensed parameters from the sensor device are recorded periodically until the raw material is loaded to an additive manufacturing tool; prior to utilizing the sensor device, registering an identity for the sensor with blockchain rules to establish a trust on data originating from the sensor device; at an additive manufacturing article supplier, using an additive manufacturing tool, manufacturing an article in accordance with a design file provided to the additive manufacturing supplier from an additive manufacturing designer; at the additive manufacturing supplier, utilizing the sensor device to monitor one or more process parameters associated with manufacturing the article; at the additive manufacturing supplier, sending data regarding the one or more process parameters from the sensor device to a network node associated with the additive manufacturing tool and generating, in the manner of a blockchain, a cryptographic distributed ledger comprising the data regarding the one or more process parameters.

## Description

### CROSS REFERENCE TO RELATED APPLICATION

This application claims priority to Indian Provisional Patent Application No. 202011045860, filed October 21, 2020, the entire content of which is incorporated by reference herein.

### TECHNICAL FIELD

The following disclosure relates generally to quality management and control systems and methods, for example in the context of additive manufacturing processes. More particularly, the following disclosure relates to distributed quality management and control systems and methods for decentralized manufacturing using connected sensor devices.

### BACKGROUND

As appearing herein, the term "additive manufacturing" and the corresponding abbreviation "AM" refer to computer-controlled manufacturing processes during which articles of manufacture are gradually built-up or compiled on a layer-by-layer basis in accordance with computer-readable AM design data. The term "AM processes" encompasses 3D printing processes including, but not limited to, SLA, FFF, MIM, and laser sintering (e.g., DMLS) processes. Similarly, articles of manufacture fabricated utilizing such AM processes are referred herein to as "additively manufactured components" or "AM components," the computer-controlled systems utilized to fabricate AM components are referred to as "additively manufacturing machines" or "AM machines," and the supply chains through which such parts are obtained are referred to as "additive manufacturing supply chains" or "AM supply chains."

AM components are gaining widespread acceptance in many industries. Certain industries, however, have proven resistant to adoption of AM components due, at least in part, to challenges related to quality control when such components are acquired through supply chains. Consider, for example, the aerospace industry. Regulatory bodies governing the aerospace industry, such as the FAA in the United States, are understandably circumspect regarding the usage of AM components in flight applications unless such components are thoroughly tested. However, the supply chains from which AM aerospace components may be obtained remain in relative infancy. To the extent such supply chains exist, they often contain part suppliers lacking the capital resources and expertise to adequately validate AM aerospace components. Similar challenges likewise hamper widespread adoption of supply chain-provided AM components in other industries, as well. This may be particularly true for industries subject to stringent regulations or that otherwise require AM components to satisfy relatively demanding design constraints including, for example, the medical, automotive, and military industries.

For designers of AM components, there is a large demand for metal 3D printing capacity to manufacturing components in accordance with their designs, and market such components on an industrial scale. Because of this growing demand, there is often less-than-sufficient internal machine capacity available at the designer, and as such the aforementioned AM supply chains must be utilized to accommodate the demand for such components. Utilizing such supply chains, however, brings with it the need for the designer to protect the intellectual property (IP) of its designs. Further, the designer must insure and be assured the printed component meets the metallurgical demands and structural integrity and physical shape (geometry) of the intended design. These features make up part the designer's intellectual property for each component produced.

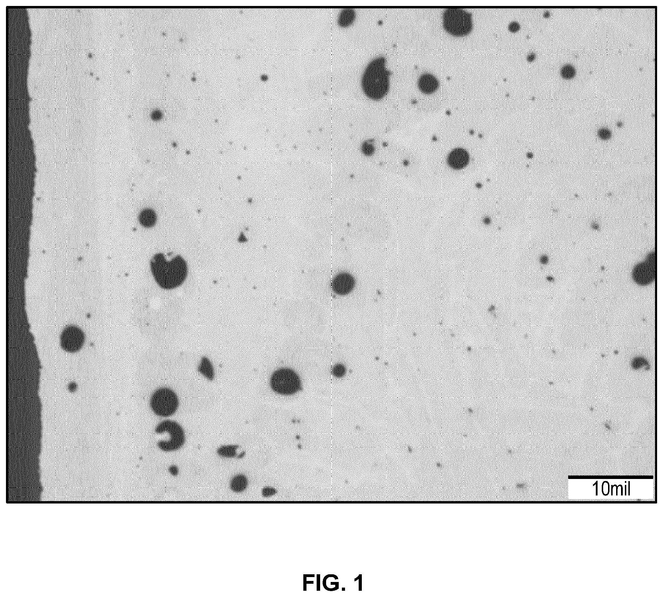

3D printing with metal is a form of AM that uses a laser or electron beam to melt metal powder using a computer-generated program to print or produce a shape of a part or component. Alternatively, metal injection molding (MIM) uses metal powders in a process in which the metal powders are mixed with binder material to create a feedstock that is then shaped and solidified using injection molding. These metal powders, however, are environmentally-sensitive. Oftentimes, there is a period of time after the metal powder is manufactured, before reaching the AM manufacturing, such as during transit through the supply chain or during storage at the manufacturer prior to use. During these times, the metal powder could possibly be exposed to unfavorable environmental conditions. For example, when powder becomes exposed to an environment with high humidity, moisture contamination can occur. Moisture contamination is the result of hydrogen modules in water attaching themselves to the powder, and this contamination may be a cause for undesirable porosity in the printed part, as illustrated in FIG. 1. Moreover, even during the manufacturing process, if environmental conditions or process parameters within the build chamber are not as intended, contamination may occur. Indeed, FIG. 1 provides an illustration of how moisture in metal powder can cause porosity during the printing process, which may result in printed components with less than the intended design strength. As such, controlling the moisture content during the 3D printing process and identifying the level of moisture in the powder before the product is placed in a printing machine is of high importance for printing a quality component. Moreover, various other forms of environmental contamination can occur during shipment or storage of the metal powder, or during the AM build process, for example as a result of oxygen levels, temperatures, pressures, vibrations, or laser parameters, and it would be desirable to have a means to monitor the metal powder during these times to ensure that parts with the intended design strength are ultimately manufactured.

There thus exists an ongoing commercial demand across multiple industries for the provision of systems and methods enhancing quality management of AM components obtained through supply chains, which includes monitoring the condition of the supply of metal powder material before and during the AM process. Ideally, such systems and methods could be implemented in a relatively seamless, cost-effective manner, while establishing high integrity, tamper-resistant quality control measures governing the integrity and condition of the supply metal powder. Furthermore, other desirable features and characteristics of the present invention will become apparent from the subsequent Detailed Description and the appended Claims, taken in conjunction with the accompanying Drawings and the foregoing Background.

### BRIEF SUMMARY

Distributed quality management and control systems and methods for decentralized manufacturing using connected sensor devices are disclosed generally herein. For example, in one embodiment, disclosed is a method for additive manufacturing process parameter monitoring of additively manufactured articles and associated raw materials, the method comprising the steps of: at an additive manufacturing raw material supplier located at a first location, packaging a raw additive manufacturing material, which may be a metal powder, and placing a sensor device inside the packaging, wherein the sensor device, which is powered by ambient energy, monitors one or more material parameters, as the packaging moves through a supply chain, and wherein sensed parameters from the sensor device are recorded periodically until the raw material is loaded to an additive manufacturing tool at a second location, different from the first location; prior to utilizing the sensor device, registering an identity for the sensor with blockchain rules to establish a trust on data originating from the sensor device; at an additive manufacturing article supplier located at the second location, using an additive manufacturing tool, manufacturing an article in accordance with a design file provided to the additive manufacturing supplier from an additive manufacturing designer located at a location different from the first and second locations; at the additive manufacturing supplier, utilizing the sensor device to monitor one or more process parameters associated with manufacturing the article, wherein the sensor device is: (1) connected to wireless network, (2) powered by ambient energy, and (3) sized and configured for monitoring the process parameters *in situ* at the additive manufacturing tool; at the additive manufacturing supplier, sending data regarding the one or more process parameters from the sensor device to a network node associated with the additive manufacturing tool; at the additive manufacturing supplier, generating a cryptographic distributed ledger comprising the data regarding the one or more process parameters, wherein the ledger is generated in the manner of a blockchain; and from the additive manufacturing supplier, the distributed ledger that is also accessible to the additive manufacturing designer using a private network, wherein the analyses of the data regarding the one or more process parameters are performed automatically by the blockchain rules, where in rules defined by additive manufacturing designer, for any anomalies during the manufacture of the article.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

The methods set-forth above and described elsewhere in this document can be implemented utilizing complementary program products, such as software applications, executed on suitably-equipped AM machines and/or other systems in bidirectional communication with AM machines. Various additional examples, aspects, and other useful features of embodiments of the present disclosure will also become apparent to one of ordinary skill in the relevant industry given the additional description provided below.

### BRIEF DESCRIPTION OF THE DRAWINGS

At least one example of the present disclosure will hereinafter be described in conjunction with the following figures, wherein like numerals denote like elements, and:
FIG. 1 is a microscopic view of an additively-manufactured part exhibiting undesirable porosity;
FIG. 2 illustrates an exemplary blockchain used in connection with data transfers between the designer and one or more connected sensor devices in accordance with this disclosure;
FIG. 3 is a functional, block illustration of a connected sensor device suitable for use in connection with the AM quality management systems and methods of the present disclosure;
FIG. 4 is a perspective view of an exemplary embodiment of a connected sensor device in accordance with the functional, block illustration of FIG. 3;
FIG. 5 is a schematic illustrating a quality management system (QMS) architecture suitable for monitoring the quality of AM build materials through a supply chain and the build process, as illustrated in accordance with an exemplary embodiment of the present disclosure; and
FIG. 6 is a process flow diagram illustrating a method for AM quality management in accordance with some embodiments of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect.

The following describes quality management systems (QMS) and methods for enhancing quality control of AM components obtained through supply chains, which utilize connected sensor devices and blockchain technology to monitor and verify the quality of the AM build material (metal powder) throughout the supply chain as well as to monitor and validate the manufacturing process utilizing such build material. Embodiments of the below-described connected sensor devices may be utilized by vendors (the supplier of AM parts) to fulfill purchase orders placed by part designers. A given supply chain may include only a part designer and any number of vendors.

The below-described QMS and methods, along with their attendant connected sensor devices and blockchain data transfer protocols, may be particularly useful for the production of AM components required to satisfy relatively stringent design parameters. One primary usage envisioned for the QMS and methods described herein is connected to the production of aerospace components for flight applications. Such aerospace component may include, but are not limited to, GTE, ECS, and ATS components, to list but a few examples. This notwithstanding, the below-described systems and methods, and the program products through which such methods are conveniently implemented, are not restricted to usage within any particular industry or to the production of any particular part types. Instead, embodiments of the QMS, connected sensor devices, methods, and program products may be beneficially employed across a wide range of industries including the automotive, medical, and military industries.

The connected sensor devices described in the present disclosure make use of blockchain to transfer data from their location (for example, within a metal powder shipment in transit, or at an AM build machine at a vendor) to the designer of the AM component. As used in the present disclosure, a "blockchain" generally refers to a distributed ledger of transactions, where various parties have access to the distributed ledger. The parties can use the distributed ledger to perform various functions, such as publishing new transactions to the blockchain or using the blockchain to verify ownership of something. New transactions are added as blocks to a blockchain using cryptographic operations, and each block in the blockchain (except the first block) is linked to a previous block in the blockchain. Approval by a majority of parties is generally needed to add transactions to the blockchain or to verify ownership.

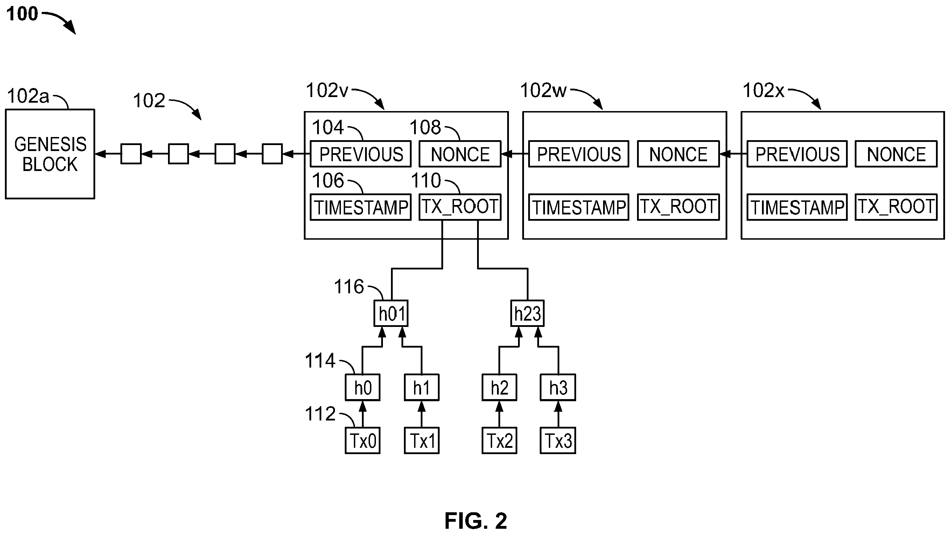

As shown in FIG. 2, the blockchain 100 utilized for the connected sensor devices of the present disclosure includes a sequence of blocks 102 a-102 x (which are referred to generally as blocks 102). Each block 102 functions as a record associated with a specific transaction. As described in more detail below, each transaction represented by a block 102 in the blockchain 100 is associated in some way with a transfer of data related to the AM build material or the AM process. For example, one or more blocks 102 in the blockchain 100 could represent temperature or pressure or humidity data. As another example, one or more blocks 102 in the blockchain 100 could represent additive manufacturing laser power data as generated at the vendor/supplier. In some cases, one or more blocks 102 in the blockchain 100 could represent vibration or pressure data experienced at any point from manufacture of the metal powder to its use in the AM build process. Of course, the blocks 102 could be associated with any other transactions related to the AM component build material or manufacture.

Except for the first block 102 a in the blockchain 100, each block 102 includes a previous hash value 104, which represents a cryptographic hash from the previous block 102 in the blockchain 100. Each block 102 also includes a timestamp 106, which identifies the date and time that the associated block 102 was created. Each block 102 further includes a nonce value 108, which represents a value that is added to the block 102 by the party who created the block 102. The nonce value 108 provides proof to other parties that the party who created the block 102 performed certain cryptographic operations in order to generate a valid block 102, where the other parties can easily verify the validity of the block 102 using the nonce value 108. This feature is especially useful in connection with maintaining the integrity of the AM component build material data as the build material transits from the supply source to the AM vendor.

In addition, each block 102 includes transaction data, which includes a transaction root hash value 110. The transaction root hash value 110 in each block 102 represents a hash value generated by the party who created that block 102 based on transaction information. In this example, the transaction root hash value 110 in each block 102 can be generated by taking data 112 associated with one or more transactions (such as actual data or metadata describing the transactions) and applying one or more hashing functions using the data 112. This generates one or more hash values 114. Assuming there are multiple hash values 114, one or more additional hashing functions (such as pairwise hashing functions) can be applied to the hash values 114 in order to generate one or more additional hash values 116. An additional hashing function could then be applied to the hash values 116 and other contents of the block 102 (such as the previous hash value 104, the timestamp 106, and the nonce value 108) in order to generate the root hash value 110. Note that this represents one example of how the transaction root hash value 110 could be generated. In general, the root hash value 110 could be generated in any suitable manner, as long as the root hash value 110 represents a cryptographic hash of most or all of the block 102.

In one aspect of operation, multiple "local" copies of the blockchain 100 are stored and maintained by multiple computing nodes, each of which is accessible by one or more (and typically all) of the parties associated with the blockchain 100, for example the designer and one or more suppliers/vendors. The blockchain 100 therefore functions as a distributed ledger that can be used by multiple parties to obtain or verify information contained in the blocks 102 of the blockchain 100. The parties also generate or use transaction data, and cryptographic operations are performed using the transaction data to create and add new blocks 102 to the blockchain 100. Thus, parties can append new blocks 102 to the blockchain 100 at different computing nodes as new transactions occur, and these blocks 102 are propagated to other computing nodes so that the blockchain 100 can be updated at those nodes. Each new block 102 is linked to a previous block 102 in the blockchain 100 as described above, which helps to prevent someone from illicitly changing data in earlier blocks 102 of the blockchain 100. Approval of a majority of the parties may be required before each new block 102 is added to the blockchain 100. In a particular embodiment of the present disclosure, the blockchain 100 described above is a "private" blockchain, meaning the participation is limited to only those members invited by the administrator (for example the designer). Thus, access to the blockchain 100 may be limited to only those parties relevant to the AM process.

In this way, the blockchain 100 provides a tamper-evident distributed ledger that can be used by multiple parties, as allowed by the administrator. This helps to improve the security of the AM build powder material data transfer among the parties involved in the blockchain 100 over time. The use of blockchain technology also helps to provide data authenticity. In addition, the use of blockchain technology allows for distributed availability of the data as well as distributed accountability between the parties.

In accordance with the present disclosure, exemplary methods for additive manufacturing process parameter monitoring of additively manufactured articles and associated raw materials includes the step of, at an additive manufacturing raw material supplier located at a first location, packaging a raw additive manufacturing build material, in metal powder form. As a general matter, the build material may be formed by any suitable metal powder, such as a stainless steel powder, and alloys and super alloy materials, such as nickel-based or cobalt-based superalloys, among others. In one exemplary embodiment, particularly related to the examples of application in the aerospace industry, the build material is a high temperature nickel base super alloy such as IN625. In other embodiments, MAR-M-247, IN738, HA230, nickel, cobalt, titanium, aluminum, titanium-aluminide, or other suitable alloys may be employed. In general, the powder build material may be selected for enhanced strength, durability, and useful life, particularly at high temperatures, as required by the design intent. Powders of this form may be produced by atomization methods, for example.

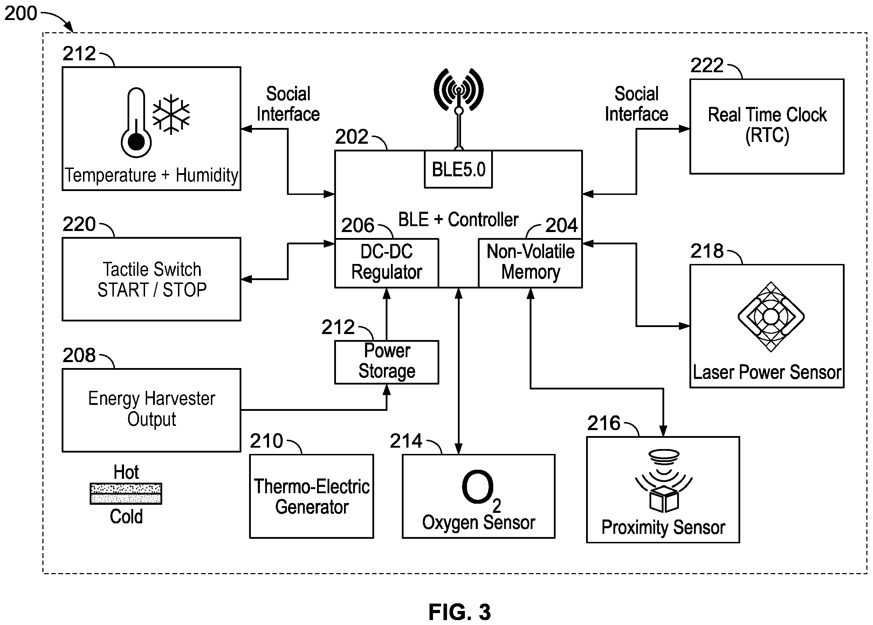

Once manufactured, the metal build material powders are placed in packaging / shipping containers for shipment to the AM vendor, which is located at a different location from the first location and thus requires shipment. The methods of the present disclosure further include the step of placing a connected sensor device inside the packaging. The sensor device, which is powered by ambient energy, monitors one or more material parameters of the AM build powder material, as the packaging moves through a supply chain. In reference now to FIG. 3, an exemplary embodiment of a connected sensor device 200 is disclosed. Sensor device 200 includes a controller and communications module 202. The controller and communications module 202 includes a controller that is provided to control and manage data and communications among the various components of sensor device 202. The controller may include a variety of electronic processing devices, memory devices, input/output (I/O) devices, and/or other known components, and may perform various control and/or communication related functions. In an exemplary embodiment, the controller is associated with an electronic (non-volatile) memory device 204 that stores various data and parameters, and software programs, etc. The controller may also include an electronic processing device (e.g., a microprocessor, a microcontroller, an application specific integrated circuit (ASIC), etc.) that executes instructions for software, firmware, programs, algorithms, scripts, etc. that are stored in memory device 204.

The controller and communications module 202 also has a wireless communications functionality. Module 202 may include any combination of hardware, software and/or other components that enable wireless data communication between module 202 and short range wireless communication devices and, in particular, may include a wireless interface configured for short range wireless communication with such devices. Module 202 may include a radio transceiver configured for short range wireless communication with mobile communications devices over an antenna using short-range wireless technologies such as Wi-Fi (IEEE 802.11), WiMAX, Wi-Fi direct, Bluetooth, Zigbee, near field communication (NFC), etc.

The controller and communications module is powered by ambient energy, which passes through a DC-DC regulator 206. As used herein, the term "ambient energy" (illustrated at block 208) may refer to any one or more of: (1) vibration energy, which is available all the time during logistical movement through the supply chain, and wherein for example the vibration is converted into electrical energy using a piezo-electric material and or using an electro-magnetic induction methodology employing a magnet and a coil; (2) radio frequency (RF) energy, which is available on land in most of the places through which the build material would transit in the form of mobile networks, AM/FM signals, and the like, wherein the device 200 may include a suitable antenna and electronics designed to convert the RF into electrical energy; or (3) thermal gradient energy (illustrated at block 210), which is available whenever a temperature gradient between two surfaces or materials is present in the application environment, and wherein the device 200 may include an appropriate thermo-electric generator. Regardless of source, the ambient energy may be stored in a power storage device 212, which is electrically coupled with the DC-DC regulator 206.

The connected sensor device 200 may further include a variety of sensors to detect and observe certain parameters associated with the shipment, storage, or use of the build material during the AM build process. These sensors may include, for example, a temperature and humidity sensor 214, which is configured to measure and send to the module 202 ambient temperature and humidity data, whether during shipment or during the build process; an oxygen sensor 214, which is configured to measure and send to the module 202 data regarding the oxygen level (concentration) in the ambient environment or particularly within the AM powder bed chamber; a proximity sensor 216, which is configured to measure the distance from the sensor device to another object, for example the build material package or the additive manufacturing device; or a laser power sensor 218, which is configured to measure and send to the module 202 data regarding the laser power being used during the AM build process. Other sensors that could be included are vibration sensors and pressure sensors, as non-limiting examples.

Additional devices that may be provided in connection with the sensor device 200, and coupled with the module 202, include a tactile start/stop switch 220, which can be used by an operator to begin operation of the device 200, for example immediate before it is placed with the build material or immediately after it has completed its use at the AM build process, and a real time clock 222, which can be used to time-stamp any data received at any of the sensors. In this manner, sensed parameters from the sensor device are recorded periodically throughout the shipment process, including when the raw material is loaded to an additive manufacturing tool at a second location, different from the first location. That is, the sensor device 200 may be operation as soon as placed with the build material at the supplier, and may continue in operation throughout shipment, including arrival at the additive manufacturing vendor / articles supplier.

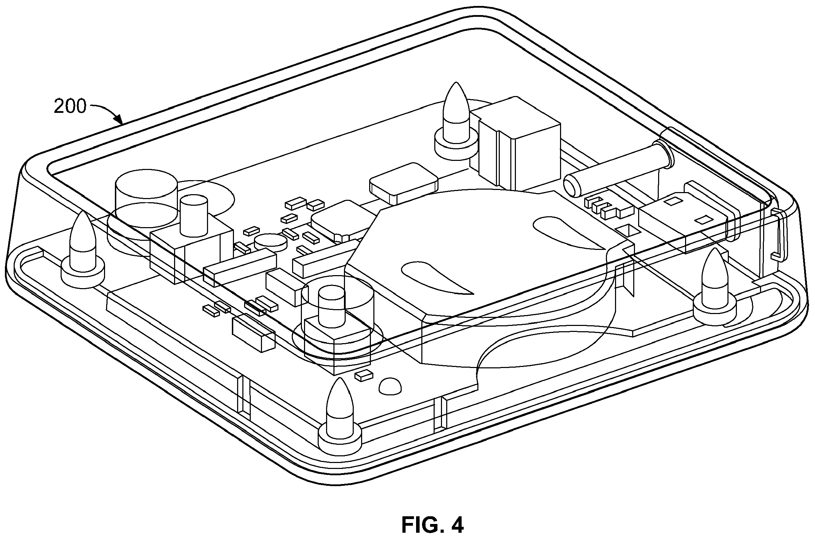

The method further includes the step of, at an additive manufacturing article supplier located at the second location, using an additive manufacturing tool, manufacturing an article in accordance with a design file provided to the additive manufacturing supplier from an additive manufacturing designer located at a second location different from the first location. Here, the method further includes the step of, at the additive manufacturing supplier, utilizing the connected sensor device 200 to monitor one or more process parameters associated with manufacturing the article. In an exemplary embodiment, at the AM article supplier, the sensor device 200 may be: (1) connected to wireless network utilizing module 202, (2) powered by ambient energy (208), and (3) sized and configured for monitoring the process parameters *in situ* at the additive manufacturing tool. In this regard, the size and configuration of the sensor devices will vary from embodiment to embodiment, depending on the size of the shipping container, the size of the AM build machine, and the number/type of sensors included, for example. One exemplary, non-limiting configured is provided in FIG. 4.

Still further, the method includes the steps of, at the additive manufacturing supplier, sending data regarding the one or more process parameters from the sensor device to a network node associated with the additive manufacturing tool, at the additive manufacturing supplier, generating a cryptographic, distributed ledger comprising the data regarding the one or more process parameters. The ledger is generated in the manner of a block-chain. Still further, the method includes the step of, from the additive manufacturing supplier, distributing the ledger to the additive manufacturing designer using a private network. The additive manufacturing supplier analyses the data regarding the one or more process parameters for any anomalies during the manufacture of the article.

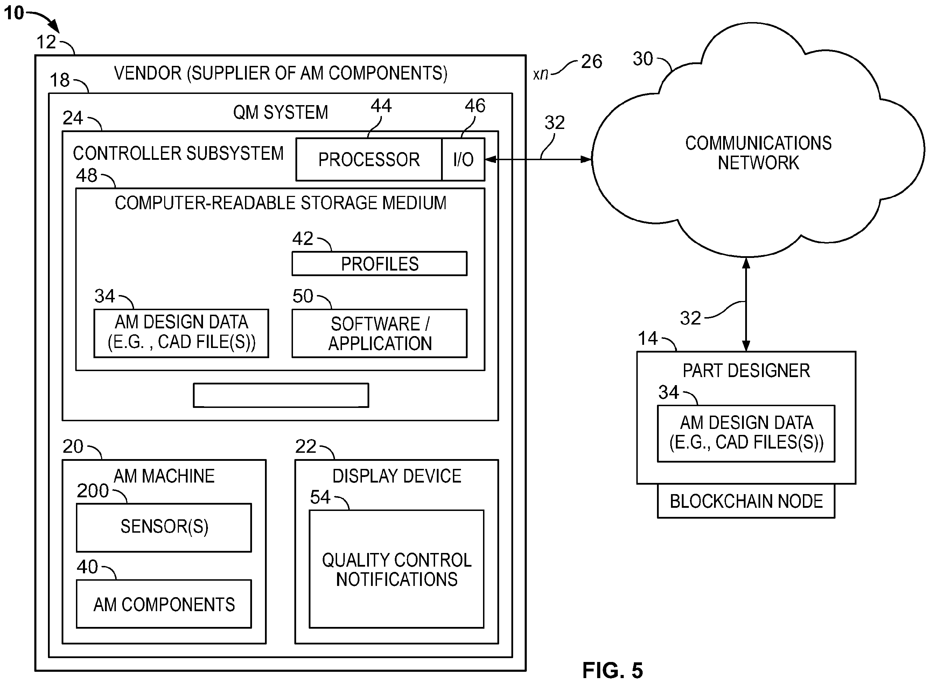

In this regard, FIG. 5 is schematic diagram illustrating an overarching QMS supply chain or architecture 10, as illustrated in accordance with an exemplary embodiment of the present disclosure. QMS architecture 10 is generically depicted as including a part supplier or vendor 12, which operates utilizing a QMS 18. QMS 18 may be utilized to carry-out the foregoing method steps of sending data, generating the cryptographic ledger, distributing the ledger, and analyzing the data. While only a single vendor 12 is shown in detail in the schematic of FIG. 1, QMS architecture 10 can contain (and embodiments of below-described QMS method may be performed by) any practical number of vendors possessing suitably-equipped QMS similar or identical to QMS 18. This is emphasized in FIG. 1 by symbol 26 ("xn") appearing adjacent the upper right corner of the box representing vendor 12.

In addition to vendor 12, QMS architecture 10 further contains a part designer 14. As represented by double-headed arrows 32, bidirectional communication between vendor 12 and part designer 14 occurs over a communications network 30, and blockchain technology, as initially described above. Communications network 30 can encompass any network or group of networks enabling data transmission between vendor 12 and part designer 14. In this regard, communications network 30 can include one or more open CDNs, VPNs, the Internet, and various other communications networks implemented in accordance with TCP/IP protocol architectures or other conventional protocols. Network 30 may also encompass one or more wired or wireless LANs, WANs, a cellular network, and/or any other public or private networks.

AM design data 34 can contain any suitable file type and will often contain or consist of one or more CAD files, which may be generated by part designer 14 utilizing various different commercially-available CAD program products. A non-exhaustive list of such commercially-available CAD program products includes TOPSOLID, CATIA, CREO, AUTODESK INVENTOR, SOLIDWORKS, and NX CAD software packages. The term "AM design data," as appearing herein, thus broadly encompasses any computer-readable data or file types, which can be utilized by an AM machine to fabricate AM components in accordance with a predetermined design, regardless of the particular manner in which the data is stored or disseminated.

Vendor-operated QMS 18 will now be described in greater detail. In the illustrated example, QMS 18 includes an AM apparatus or machine 20, a display device 22, and a controller subsystem 24, which is operatively coupled to AM machine 20 and display device 22. Addressing first AM machine 20, AM machine 20 can assume the form of any apparatus, system, or device suitable for fabricating AM components by successively building-up such parts, on a layer-by-layer basis, in accordance with CAD data files or other computer-readable AM design data. As a first example, AM machine 20 can be a 3D printer capable of producing AM components utilizing an FFF AM processes. Alternatively, and as a second example, AM machine 20 may be an SLA or laser sintering (e.g., DMLS) apparatus. In many cases, AM machine 20 may be capable of producing metallic AM components by, for example, heating a metallic source material (e.g., supplied as a filament (wire), powder bed, actively-flowed powder, or the like) utilizing a suitable heat input source (e.g., a laser or an electron beam), which creates weld pools to fuse together the source material in a targeted manner to gradually build-up or successively compile the desired component. In other embodiments, AM machine 20 may assume different forms suitable for producing AM components or three dimensionally printed parts. The components fabricated utilizing QMS 18 are generically represented in FIG. 1 by box 40.

AM machine 20 is provided with one or more connected sensors 200, which may be embodied as the connected sensors 200 described above. Collectively, the data obtained by the sensors 200 during the AM build process may yield a part-specific sensor profile 42, which can be used during the quality analysis process. Each part-specific sensor profile 42 can contain any number and type of data characteristics captured by sensors 200. QMS 18 and, specifically, controller subsystem 24 compiles part-specific sensor profiles 42 for AM components 40 during fabrication of AM components 40, and encrypts such profiles using blockchain technology. Controller subsystem 24 may transmit the encrypted part-specific sensor profiles 42 over communications network. To support such functionalities, controller subsystem 24 further includes at least one processor 44, I/O features 46, and a computer-readable memory or storage medium 48. Processor 44 is operably coupled to I/O features 46 and to storage medium 48. I/O features 46 can include a network interface, an interface to storage medium 48, an interface to display device 22, and any user input interfaces enabling local users to interact with and control QMS 18. Blockchain nodes are present in each of the vendor 12 and part designer 14 ends.

Storage medium 48 stores AM design data 34 and part-specific sensor profiles 42. Additionally, in embodiments wherein QMS 18 performs onsite quality analysis, storage medium 48 may further store specialized software application 50. Comparison software application 50 may contain computer-executable code that, when executed by processor 44, causes QMS 18 to perform the below-described QMS process. The foregoing components contained in controller subsystem 24 can each be implemented utilizing any suitable number and combination of known devices including microprocessors, memories, power supplies, storage devices, interface cards, and other standard components. Such components may include or cooperate with any number of software programs or instructions (e.g., software application 50) designed to carry-out the various methods, process tasks, encoding and decoding algorithms, and relevant display functions.

During operation of QMS 18, processor 44 selectively executes computer-readable code or instructions (herein, "software application 50"), which directs the various hardware features of QMS 18 to perform the functions described herein. Software application 50 interfaces with processor 44, storage medium 48, and I/O features 46 via any suitable operating system to provide these functionalities. Software application 50 can be provided to QMS 18 in any manner, including by download through communications network 30 from part designer 14 or secure cloud service 28. During the below-described QMS process, control logic contained in software application 50 may control AM machine 20 and/or display device 22. Additionally, when executed, software application 50 may selectively generate quality control notifications 54 on a display screen of display device 22. Quality control notifications 54 may indicate which, if any of AM components 40 are desirably subject to remedial action. Additionally, in certain instances, quality control notifications 54 may be expressed as textual annunciations or readouts, which contain additional actions to be performed for those AM components 40 subject to remedial action. Software application 50 may further selectively establish connections through communications network with appropriate remote entities (e.g., secure cloud service 28 and part designer 14), as appropriate for a given implementation of the QMS process.

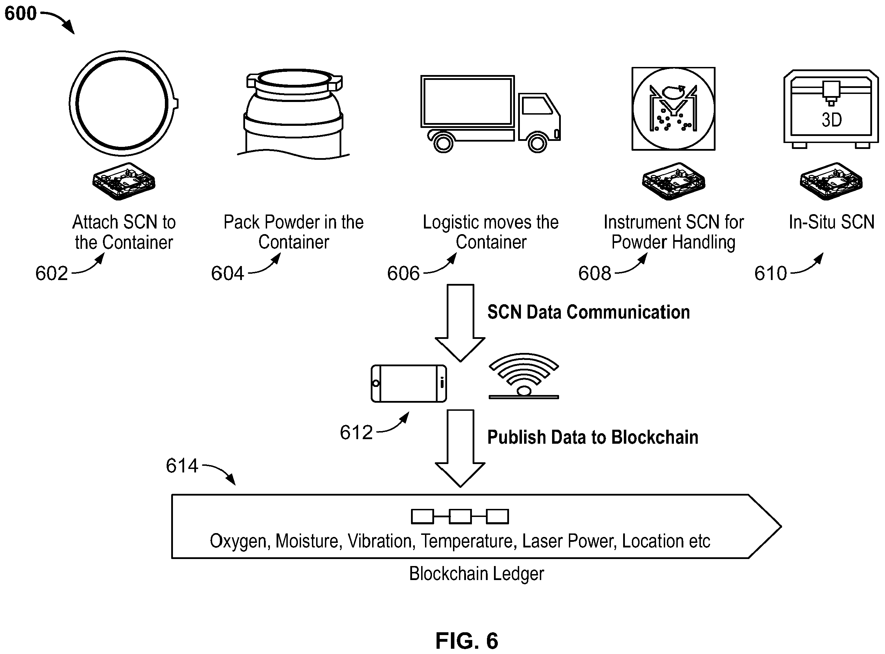

In view of an entirety of the foregoing disclosure, FIG. 6 provides an overview of the exemplary methods (600) described herein, from the manufacture of the metal powder build material to the sending of the data to the part design regarding the completed AM build process. As shown in FIG. 6, at step 602, a connected sensor device is attached to or otherwise placed with a shipping container intended for transporting the AM build powder metal material. At step 604, the build material is placed within the shipping container, in proximity to the sensor device. At step 606, the container is transported through the supply chain from the powder metal supplier to the AM build vendor, at a distant location. At step 608, sensor data is collected during the shipment process, and then, at step 610, after the powder material arrives at the AM build vendor and the powder material is used in an AM build process to build a component part, sensor data is collected during the build process. Thereafter, at step, 612, the data collected at steps 608 and 610 is transmitted, using the wireless transmitters contained in the sensor devices, to a nearby receiving unit, for example at the AM build vendor. Finally, at step 614, from the AM build vendor, using the QMS architecture described above with blockchain technology, the data is published to blockchain, and thus made available to the part designer for data analysis. The AM part designer may thus perform data analysis on the data received through the QMS architecture.

Accordingly, the present disclosure has provided embodiments of distributed quality management and control systems and methods for decentralized manufacturing using connected sensor devices and blockchain, which exhibit numerous advantages over the prior art. For example, the embodiments provide quality control monitoring for the AM building material from its initial manufacture, through the supply chain, and ultimately during the AM build process. The embodiments utilize the concept secure file transfer where the system will create, encrypt, and send to the files to the appropriate supplier. The embodiments described herein ensure that the build material is suitable for producing a component part that is within the design specifications, and generally free of excess or undesirable porosity or defects.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A method for additive manufacturing process parameter monitoring of an additively manufactured article and associated raw additive manufacturing materials, the method comprising the steps of:
at an additive manufacturing raw material supplier located at a first location, packaging the raw additive manufacturing materials, and placing a sensor device inside the packaging, wherein the sensor device, monitors one or more shipment and storage parameters, as the packaging moves through a supply chain, and wherein the one or more shipment and storage parameters from the sensor device are recorded periodically until the raw material is loaded to an additive manufacturing tool at a second location, different from the first location;
at an additive manufacturing article supplier located at the second location, using the additive manufacturing tool and the raw additive manufacturing materials, manufacturing the additively manufactured article in accordance with a design file provided to the additive manufacturing supplier from an additive manufacturing article designer located at a third location different from the first and second locations;
at the additive manufacturing article supplier, utilizing the sensor device to monitor one or more process parameters associated with manufacturing the additively manufactured article;
at the additive manufacturing supplier, sending the data regarding the one or more shipment and storage parameters and the one or more process parameters associated with manufacturing the additively manufactured article from the sensor device to a network node associated with the additive manufacturing tool; and
at the additive manufacturing supplier, generating a cryptographic distributed ledger comprising the data regarding the one or more shipment and storage parameters the data regarding the one or more process parameters associated with manufacturing the additively manufactured article, wherein the ledger is generated using blockchain rules.

2. The method of claim 1, wherein the raw additive manufacturing material comprises a metallic powder.

3. The method of claim 1, wherein the sensor device is powered by ambient energy chosen from one or more of: vibration energy, radio frequency (RF) energy, or thermal gradient energy.

4. The method of claim 1, wherein the one or more shipment and storage parameters are chosen from: temperature, humidity, or oxygen level.

5. The method of claim 1, further comprising, prior to placing the sensor device inside the packaging, registering an identity for the sensor with the blockchain rules to establish a trust on data originating from the sensor device.

6. The method of claim 1, wherein the design file provided to the additive manufacturing supplier is provided using the blockchain rules.

7. The method of claim 1, wherein the one or more process parameters associated with manufacturing the additively manufactured article are chosen from: temperature, humidity, oxygen level, proximity, or laser power.

8. The method of claim 1, wherein, at the additive manufacturing supplier, the sensor device is connected to the network node a wireless network.

9. The method of claim 1, wherein, at the additive manufacturing supplier, the sensor device is powered by ambient energy chosen from one or more of: vibration energy, radio frequency (RF) energy, or thermal gradient energy.

10. The method of claim 1, wherein, at the additive manufacturing supplier, the sensor device is sized and configured for monitoring the one or more process parameters associated with manufacturing the additively manufactured article *in situ* at the additive manufacturing tool.

11. The method of claim 1, wherein the cryptographic distributed ledger is accessible by the additive manufacturing article designer located at the third location using a private blockchain network.

12. The method of claim 11, further comprising, at the additive manufacturing article designer, accessing and analyzing the cryptographic distributed leger to determine the presence of any anomalies in the data regarding the one or more shipment and storage parameters the data regarding the one or more process parameters associated with manufacturing the additively manufactured article.
